(19) Europäisches Patentamt
European Patent Office
Office européen des brevets

(11) Veröffentlichungsnummer: **0 491 286 B1**

# (12) EUROPÄISCHE PATENTSCHRIFT

(45) Veröffentlichungstag der Patentschrift: **05.04.95**

(51) Int. Cl.$^6$: **C09D 127/12**, C08F 8/12

(21) Anmeldenummer: **91121358.5**

(22) Anmeldetag: **12.12.91**

## (54) Verfahren zur Herstellung eines vernetzungsfähigen Lackbindemittels aus Fluorpolymeren-Lösungen.

(30) Priorität: **15.12.90 DE 4040129**

(43) Veröffentlichungstag der Anmeldung:
**24.06.92 Patentblatt 92/26**

(45) Bekanntmachung des Hinweises auf die Patenterteilung:
**05.04.95 Patentblatt 95/14**

(84) Benannte Vertragsstaaten:
**DE FR GB IT NL**

(56) Entgegenhaltungen:
**WO-A-89/04847**
**US-A- 4 584 343**

(73) Patentinhaber: **HOECHST AKTIENGESELL-SCHAFT**

**D-65926 Frankfurt (DE)**

(72) Erfinder: **Schlipf, Michael, Dr.**
**Putzenlehnerstrasse 22**
**W-8269 Burgkirchen (DE)**
Erfinder: **Weiss, Eduard**
**Pergerstrasse 18**
**W-8263 Burghausen (DE)**

**EP 0 491 286 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines vernetzungsfähigen Lackbindemittels durch Aufarbeitung eines in Lösung befindlichen fluorhaltigen Copolymeren, das aus copolymerisierten Einheiten eines Perfluorolefins, eines Vinylesters einer kurzkettigen Carbonsäure, der verseifbar ist, und eines Vinylesters einer stark verzweigten Carbonsäure, der der Verseifung widersteht, besteht.

Aus der US-PS 4 584 343 ist es bekannt, fluorhaltige Copolymere herzustellen, die als Lackbindemittel geeignet sind, und die neben einem Fluorolefin einen Vinylester einer kurzkettigen Carbonsäure, welcher der Verseifung zugänglich ist, und einen Vinylester einer stark verzweigten Carbonsäure, der praktisch unverseifbar ist, enthalten. Derartige Copolymere können in wäßriger Phase als kolloidale Dispersionen nach dem Verfahren der Emulsionspolymerisation und als Suspensionspolymerisate, die als gröber körniges Produkt während der Polymerisation ausgefällt werden, hergestellt werden. Auch ist in dieser Schrift erwähnt, daß eine Copolymerisation in organischen Lösungsmitteln, die nur geringe telogene Aktivität aufweisen, möglich ist. In dieser Schrift ist ferner beschrieben, daß das aus wäßriger Phase gefällte und dann getrocknete Copolymerisat durch Lösen in einem kurzkettigen Alkanol in Gegenwart starker Basen und anschließendes Fällen mit Wasser verseift werden kann. Auch die Verseifung in wäßrigen Alkalien ist möglich. Diese heterogene Reaktion ist jedoch schwer zu handhaben und benötigt lange Reaktionszeiten. Insbesondere wenn eine komplette Verseifung erreicht werden soll, sind sehr lange Zeiten und der Einsatz großer Mengen an starken Alkalien erforderlich. Dabei besteht die Gefahr, daß auch der unverseifbare Vinylester in kleinen Anteilen angegriffen wird und eine Dehydrofluorierung an der Polymerkette eintritt, was wegen der möglichen Verunreinigung und wegen der eintretenden Schädigung des Copolymeren unerwünscht ist. Es bestand daher die Aufgabe, nach einem glatteren Verfahren zur Verseifung der dieser Reaktion leicht zugänglichen Estergruppen Ausschau zu halten.

Diese Aufgabe wird erfindungsgemäß gelöst durch ein Verfahren der eingangs genannten Art, das dadurch gekennzeichnet ist, daß

a) zunächst der Hauptteil des Lösungsmittels unter Normaldruck destillativ entfernt wird,

b) sodann die Restmonomeren durch Vakuumdestillation unter Zwangsförderung des hochviskosen Copolymeren entfernt werden,

c) dieses hochviskose Copolymere gelöst wird in einem Gemisch aus einem Alkanol mit 1 bis 4 C-Atomen und einem Lösungsmittel, wobei dieses Gemisch imstande sein soll, auch das verseifte Produkt homogen zu lösen, und

d) die Verseifung unter Zugabe eines alkalischen Agens durchgeführt, gegebenenfalls das Lösungsmittel aus c) destillativ abgetrennt und das verbleibende hochviskose Copolymere in einem Lacklösungsmittel gelöst wird, und

e) die entstandene Copolymerlösung einer Filtration unterworfen wird.

Die für die Aufarbeitung nach dem erfindungsgemäßen Verfahren in Frage kommenden fluorhaltigen Copolymeren sind solche, die $\alpha$) copolymerisierte Einheiten eines Perfluorolefins enthalten, insbesondere eines solchen mit 2 bis 10 C-Atomen, das eine endständige Doppelbindung besitzt und geradkettig oder verzweigt sein kann, wie beispielsweise Perfluorbuten-1, Perfluorocten-1, Perfluorhexen-1 und Perfluorisobutylen und vorzugsweise Hexafluorpropylen und Tetrafluorethylen (TFE). Sie enthalten ferner $\beta$) copolymerisierte Einheiten eines Vinylesters einer kurzkettigen Carbonsäure, der verseifbar ist, insbesondere einer Carbonsäure, deren Acylrest 2 bis 4 C-Atome besitzt, wie vor allem Vinylpropionat und insbesondere Vinylacetat. Sie enthalten schließlich $\gamma$) copolymerisierte Einheiten eines Vinylesters einer stark verzweigten Carbonsäure, der der Verseifung widersteht. Es sind dies Vinylester der allgemeinen Formel

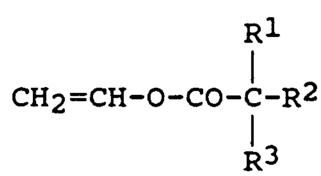

worin $R^1$, $R^2$ oder $R^3$ verzweigte oder geradkettige Alkylreste sind und der gesamte Acylrest 9 bis 11 C-Atome aufweist. Dabei kann höchstens einer dieser Reste $R^1$, $R^2$, $R^3$ Wasserstoff sein. Bevorzugt sind verzweigte Acylreste der obigen Formel, die 9 C-Atome besitzen und aus Isomeren bestehen, die außer dem einen quartären C-Atom noch ein zweites quartäres C-Atom oder noch 1 bis 2 tertiäre C-Atome im gleichen Rest aufweisen. In diesem Copolymeren sind die Vinylester der Komponente $\gamma$) in einem Anteil

von 20 bis 80 Mol-%, die Vinylester der Komponente β) in einem Anteil von 5 bis 50 Mol-% und die Fluoralkene der Komponente α) in einem Anteil enthalten, der die Summe der Komponenten α) + β) + γ) auf 100 Mol-% ergänzt, jedoch mit der Maßgabe, daß mindestens 10 Mol-% Fluoralkeneinheiten im Copolymeren vorhanden sind. Vorzugsweise beträgt der Anteil von γ) 10 bis 60 Mol-%, der Anteil von β) 20 bis 50 Mol-%, wobei α) wiederum in einem Anteil vorhanden ist, daß die Summe α) + β) + γ) auf 100 Mol-% ergänzt wird und wobei aber α) mindestens 10 Mol-%, vorzugsweise mindestens 25 Mol-%, ausmacht.

Die Copolymerisation zur Herstellung der genannten Copolymeren erfolgt in organischen Lösungsmitteln, die das gebildete Copolymere lösen. Dafür geeignete Lösungsmittel sind insbesondere perfluorierte oder mit Fluor und Chlor perhalogenierte oder teilweise halogenierte Lösungsmittel, wie beispielsweise 1,1,2-Trichlor-1,2,2-trifluorethan, Perfluorcyclobutan, Perfluor-n-pentan, -isopentan, -n-hexan, -isohexan, 1,1,1,2-Tetrafluorethan oder 1,1,2,2-Tetrafluorethan. Ferner kommen in Betracht Alkanole, wie tert.-Butanol, Carbonsäureester, wie beispielsweise Butylacetat oder n-Propylacetat, oder aliphatische oder cycloaliphatische Ketone, wie beispielsweise Methylisobutylketon oder Cyclohexanon, sowie ferner Alkylaromaten, wie beispielsweise Toluol oder Xylol, oder auch Gemische aus den genannten Lösungsmitteln sowie ferner Gemische der genannten Lösungsmittel mit Ethanol.

Die Copolymerisation wird durchgeführt in Gegenwart geeigneter radikalbildender Initiatoren, wofür entweder harte energiereiche Strahlung oder Initiatoren, wie beispielsweise Fluoracylperoxide oder Peroxydicarbonate, in Betracht kommen. Ferner können Kettenübertragungsmittel zur Regelung des Molgewichtes zugegen sein.

Nach diesem Verfahren fallen die genannten Copolymeren in Form von klaren, niedrigviskosen Lösungen an, die üblicherweise 5 bis 30 Gew.-% des Copolymeren enthalten. Das Verfahren zur Aufarbeitung dieser Lösungen zwecks Gewinnung eines vernetzungsfähigen Lackbindemittels, das Gegenstand dieser Erfindung ist, erfordert zunächst die Abtrennung der Restmonomeren, nämlich des verseifbaren und des unverseifbaren Vinylesters. Da der verseifbare Vinylester im Falle niedrigsiedender Lösungsmittel und der unverseifbare Vinylester in jedem Fall oberhalb des Siedepunktes des jeweiligen Lösungsmittels sieden, müssen diese Lösungsmittel zuerst entfernt werden. Ist ein hochsiedendes Lösungsmittel zugegen, wird der verseifbare Vinylester hier ebenfalls bereits entfernt. Dies geschieht durch Destillation bei Normaldruck in Geräten, wie Dünnschicht-, Fallfilm-, Rotations- oder Kurzwegverdampfern.

Die destillative Abtrennung der Restmonomeren, das heißt des unverseifbaren und gegebenenfalls des verseifbaren Vinylesters, erfolgt durch Vakuumdestillation, beispielsweise über Dünnschichtverdampfer, Kurzweg-, Rotationsverdampfer und Filmtruder. Für diesen Aufarbeitungsschritt sind nur Apparaturen geeignet, in denen eine Zwangsförderung des resultierenden, hochviskosen Produktes möglich ist.

Gegebenenfalls können vor der Aufarbeitung Fließhilfsmittel zugesetzt werden, die unter den angewandten Aufarbeitungsbedingungen nicht vollständig aus dem Produkt abgetrennt werden und so zur Herabsetzung der Viskosität führen. Auch erfolgt bei Zugabe dieser Fließhilfsmittel eine verbesserte Abtrennung der Restmonomeren, was zu einer geringeren Iod-Farbzahl des resultierenden Lackbindemittels führt. Allgemein ist für ein Lackbindemittel eine möglichst niedrige Iod-Farbzahl anzustreben, um die Witterungsstabilität nicht zu vermindern, die Herstellung von Klarlacken zu ermöglichen oder um bei pigmentierten Beschichtungssystemen den Pigmentfarbton nicht zu verändern.

Geeignet als Fließhilfsmittel sind Lösungsmittel, die im alkalischen pH-Bereich nicht verändert werden und die das Eigenschaftsbild des resultierenden Lackbindemittels, sofern sie nur in geringer Konzentration vorliegen, nicht negativ beeinflussen. Beispielsweise sind zu nennen alkylsubstituierte aromatische Kohlenwasserstoffe, wie Toluol, Xylole oder Mesitylene oder Alkylaromatenschnitte, wie sie von der Firma Esso-Chemie unter den Bezeichungen ®Solvesso 100, ®Solvesso 150 oder ®Solvesso 200 angeboten werden.

Zweckmäßigerweise kann diese Vakuumdestillation zur möglichst vollständigen Abtrennung der Restmonomeren als Extraktivdestillation geführt werden. Dazu werden organische Lösungsmittel oder Lösungsmittelgemische, die zum Beispiel azeotrope Gemische mit den obengenannten Restmonomeren ausbilden und dadurch eine bessere Abtrennung bewirken, zusätzlich während der Destillation in den Verdampfer eingespeist. Als Extraktionsmittel können insbesondere die gleichen Lösungsmittel dienen, die auch als Fließhilfsmittel geeignet sind.

Nach der destillativen Abtrennung der genannten Restmonomeren, wird das bei erhöhter Temperatur hochviskose und bei Raumtemperatur in fester Form vorliegende Produkt in einem für die anschließende Verseifung des verseifbaren Vinylesters geeigneten Lösungsmittelgemisch gelöst. Es ist wesentlich, ein solches Lösungsmittelgemisch zu wählen, in denen sowohl das unverseifte als auch das verseifte Produkt in einer für die Verseifung ausreichenden Copolymerkonzentration homogen löslich ist und somit das verseifte Produkt in Lösung gehalten wird. Unter dem Begriff "Verseifung" soll dabei im Rahmen dieser Beschreibung sowohl die Esterspaltung durch Hydrolyse als auch diejenige durch Alkoholyse verstanden werden.

Die Zusammensetzung des Lösungsmittelgemisches ist abhängig von der Zusammensetzung des zu lösenden Fluorcopolymeren.

Es müssen jedoch 10 bis 60 Vol-%, vorzugsweise 10 bis 50 Vol-%, des Lösungsmittelgemisches an einem Alkanol mit 1 bis 4 C-Atomen, vorzugsweise an Methanol, vorhanden sein. Dieses Alkanol fungiert nicht nur als Lösungsmittel, sondern ist auch für die Verseifungsreaktion erforderlich. Die andere Komponente (40 bis 90 Vol-%) kann ein reines Lösungsmittel sein oder ebenfalls ein Gemisch sein. Vorzugsweise sind folgende Gruppen von Lösungsmitteln geeignet: perfluorierte Cycloalkane mit 4 bis 6 C-Atomen, wie beispielsweise Perfluorcyclobutan; perfluorierte oder mit Fluor und Chlor vollständig oder teilweise substituierte Alkane mit 2 bis 12 C-Atomen, vorzugsweise 2 bis 6 C-Atomen, wie beispielsweise 1,1,2-Trichlor-1,2,2-trifluorethan, Perfluor-n-pentan, -isopentan, -n-hexan, -isohexan, 1,1,1,2-Tetrafluorethan oder 1,1,2,2-Tetrafluorethan, aliphatische Ketone mit 3 bis 11 C-Atomen, vorzugsweise 3 bis 7 C-Atomen, wie beispielsweise Methylethyl- oder Methylisobutylketon; alkylsubstituierte Benzole, wie zum Beispiel Toluol, Xylol, Mesitylen oder Ethylbenzol, wobei diese 1 bis 6 Alkylketten mit 1 bis 3 C-Atomen pro Alkylgruppe aufweisen; schließlich auch perfluorierte Ether, die Oligomere des Tetrafluorethylen- oder Hexafluorpropylenoxids oder von Gemischen dieser beiden Oxide darstellen. Diese Lösungsmittel können gegebenenfalls auch nach Entfernung eventuell anwesender Restmonomeranteile aus den Schritten a) und b) bei Schritt c) in den Prozeß zurückgeführt werden.

Die Verseifung erfolgt durch Zugabe eines alkalischen Agens, insbesondere eines Alkalihydroxids, wie Natrium- oder Kaliumhydroxid, das in Form einer konzentrierten wäßrigen Lösung zugegeben wird, oder durch Zugabe eines Alkalimetallalkoxids, beispielsweise Natriummethylat, das in konzentrierter Lösung im entsprechenden Alkohol zugegeben wird. Die Temperatur des Reaktionsmediums soll zweckmäßigerweise 15 bis 50 °C betragen. Bei niedrigsiedenden Lösungsmitteln kann gegebenenfalls erhöhter Druck angewandt werden.

Bei einem Zusatz von 4 bis 20 Mol-% Natriumhydroxid, bezogen auf den Anteil des verseifbaren Vinylesters im Polymeren, ist die Verseifung bei einer Reaktionstemperatur von 20 °C nach 5 bis 20 Stunden beendet. Die Umsatzkontrolle der Überführung der Anteile des verseifbaren Vinylesters im Polymeren in Vinylalkoholanteile erfolgt durch IR-Spektroskopie.

Unter den beispielhaft genannten Reaktionsbedingungen ist es möglich, die Einheiten des Vinylesters der Komponente $\beta$) in einem Anteil von 50 bis 100 %, vorzugsweise von 50 bis 80 %, in OH-Gruppen zu überführen.

Bei der Verseifung nach den Bedingungen des erfindungsgemäßen Verfahrens, bei denen sowohl das unverseifte als auch das verseifte Fluorcopolymere in dem zur Verseifung verwendeten Lösungsmittel oder Lösungsmittelgemisch homogen löslich ist, resultieren zwei Vorteile, die für die Herstellung des Bindemittels eines hochwitterungsbeständigen Beschichtungssystems wesentlich sind:
Zum einen können hinreichend milde Verseifungsbedingungen angewandt werden, die eine weitgehende Verseifung ermöglichen, ohne die übrige Polymerkette zu schädigen, wie sie sich zum Beispiel in einer Braunfärbung durch Dehydrohalogenierung an Tetrafluorethylen-Vinylester-Nahtstellen in der Polymerkette manifestiert, aber gleichzeitig einen Angriff auf Einheiten des nicht verseifbaren Vinylesters sicher ausschließen. Zum anderen sind die Einheiten des verseifbaren Vinylesters in Lösung vorliegend einer Verseifung viel leichter zugänglich als in heterogener Phase und ermöglichen so die Herstellung eines Polymeren, das eine ausreichende Anzahl an funktionellen OH-Gruppen für eine anschließende Aushärtung durch chemische Vernetzung zur Verfügung hat.

Vinylestereinheiten, die unter homogenen Verseifungsbedingungen und den angegebenen Basenmengen nicht verseift werden, sind einer Verseifung im ausgehärteten Beschichtungssystem nicht zugänglich und beeinträchtigen somit die hohe Witterungsbeständigkeit des Fluorlackbeschichtungssystems nicht.

Die Verseifungsreaktion wird beendet, indem nicht verbrauchte Base durch Zugabe einer Säure, wie beispielsweise Essigsäure, neutralisiert wird. Das für die Verseifung benötigte Lösungsmittelgemisch kann auch für den Einsatz des Produktes als Lackbindemittel geeignet sein. Gegebenenfalls ist jedoch die Abtrennung der Lösungsmittelphase des Verseifungsschrittes c) und die anschließende Wiederauflösung in einem Lacklösungsmittel zweckmäßig.

Das Abtrennen des zur Verseifung benötigten Lösungsmittelgemisches erfolgt durch Destillation unter Normaldruck. Geeignet hierfür ist vorzugsweise ein Dünnschichtverdampfer oder aber, je nach Viskosität des resultierenden Bindemittelharzes, ein Fallfilm- oder Kurzwegverdampfer.

Nach dieser Abtrennung wird das hochviskose Harz in eine Rühr- oder Mischvorrichtung überführt, wo es in einem Lösungsmittel gelöst wird, das für den Einsatz als Lackbindemittel geeignet und in der Lackindustrie üblich ist.

Solche Lösungsmittel werden vor allem aus den folgenden Gruppen ausgewählt: aliphatische Alkohole mit 1 bis 8 C-Atomen, insbesondere mit 4 bis 8 C-Atomen; Polyglykole, wie Ethylendiglykol, Ethylentriglykol, Propylendiglykol, Propylentriglykol; Mono- und Diether solcher Glykole, wie beispielsweise Ethylenglykolmonoethylether, Ethylenglykoldiethylether, Ethylenglykolmonobutylether, Ethylenglykoldibutylether, Propylenglykolmonomethylether; Glykolester oder Glykoletherester, wie beispielsweise Ethylenglykolacetat oder Ethylenglykolacetatethylether, Propylenglykolacetatethylether und -methylether; ferner alkylierte und dialkylierte Aromaten, wie beispielsweise Xylol und Diethylbenzol sowie Isomerengemische alkylierter Aromaten, wie sie unter den Bezeichnungen ®Solvesso oder ®Shellsol vertrieben werden; Ketone, wie zum Beispiel Methylisobutylketon, Cyclohexanon und Isophoron; Carbonsäureester, insbesondere Ester der Essigsäure und Propionsäure mit Alkoholen von 1 bis 6 C-Atomen; schließlich alle Gemische solcher Lösungsmittel, soweit sie homogen miteinander mischbar sind. Das Mischungsverhältnis von gelösten Copolymeren zu Lösungsmittel kann 95 : 5 bis 5 : 95, vorzugsweise 90 : 10 bis 10 : 90, betragen, es sind also auch Lacksysteme mit hohen Bindeharzanteilen ("high solids") herstellbar.

Anschließend wird die Lösung zur Entfernung von Salzen, wie sie beispielsweise bei der Neutralisation von Basen mit Essigsäure entstehen, und von unlöslichen Polymerpartikeln einer Filtration unterworfen. Die Filtration erfolgt zur Erhöhung der Filterleistung vorzugsweise bei erhöhtem Druck, wobei Drücke zwischen 1 bar und 25 bar üblich sind, und bei erhöhter Temperatur, wobei diese unterhalb des Siedepunktes des Lösungsmittels liegen muß. Als Apparaturen zur Filtration sind sowohl Einschichten- als auch Mehrschichtenfilter geeignet. Vorzugsweise sollen sie eine Möglichkeit zur Druckbeaufschlagung und zur Beheizung haben. Als Filtermedium sind Filterschichten, insbesondere Tiefenfilterschichten und Membranfilter, geeignet.

Als geeignete Filtermedien seien hier beispielsweise Filterschichten der Firma Seitz, Bad Kreuznach, BR Deutschland, genannt, die unter der Bezeichnung ®Seitz-Supra am Markt erhältlich sind.

Als Material für die Filtermedien sind nur Stoffe geeignet, die in dem verwendeten Lösungsmittel oder Lösungsmittelgemische weder löslich sind noch ein merkliches Quellverhalten aufweisen.

Zur Erhöhung der Filterleistung ist es sinnvoll, die Filtration in mehreren Stufen durchzuführen, wobei von Stufe zu Stufe die Porengröße der verwendeten Filtermedien verkleinert wird.

Aus dem nach dem erfindungsgemäßen Verfahren hergestellten Lackbindemittel läßt sich ein hochwitterungsbeständiges Beschichtungssystem herstellen, indem in einem ersten Schritt - soweit erforderlich - für die Lackherstellung übliche Pigmente, wie zum Beispiel Titandioxid, und andere Additive, zum Beispiel Verlaufsmittel, eingearbeitet werden.

Wenn das Lackbindemittel für die Herstellung eines wärmehärtenden Lacks verwendet wird, so werden anschließend hierfür geeignete Vernetzungsmittel, wie zum Beispiel Melaminharze oder blockierte Polyisocyanate, zugemischt, wobei diese Mischungen Einkomponenten-Beschichtungssysteme darstellen.

Wenn andererseits das Copolymere zur Herstellung eines Lacks verwendet wird, bei dem die Härtung schon bei Raumtemperatur erfolgen soll, so wird als Vernetzer ein nicht-blockiertes Polyisocyanat verwendet. Bei dieser Applikation wird das Härtungsmittel vor Gebrauch gesondert zugemischt, und man arbeitet mit einem Zweikomponenten-Beschichtungssystem.

Die Vorteile des erfindungsgemäßen Verfahrens liegen darin, daß unter Anwendung milder Reaktionsbedingungen, die eine Schädigung des Polymeren ausschließen, fluorhaltige Copolymere hergestellt werden können, die eine ausreichende Anzahl von OH-Gruppen enthalten und die somit nach Aushärtung durch chemische Vernetzung für die Herstellung hochwitterungsbeständiger Beschichtungen geeignet sind.

Die Erfindung wird durch folgende Beispiele erläutert:

Beispiel 1

Für die Aufarbeitung wird ein fluorhaltiges Copolymeres eingesetzt, das durch Copolymerisation von TFE, von einem Vinylester einer stark verzweigten Carbonsäure mit einem Acylrest von 9 C-Atomen (wobei im Acylrest ein Isomerengemisch vorliegt, enthaltend 28 Mol-% C-Ketten mit zwei quartären C-Atomen; 68 Mol-% C-Ketten mit einem quartären und zwei tertiären C-Atomen; 4 Mol-% C-Ketten mit einem quartären und einem tertiären C-Atom) und von Vinylacetat in 1,1,2-Trichlor-1,2,2-trifluorethan erhalten worden ist. Es liegt als eine klare Copolymerlösung mit einem Feststoffgehalt von 17 % vor. Der Restmonomergehalt beträgt 1,9 % an stark verzweigtem Vinylester und 1,0 % an Vinylacetat. Im ersten Schritt erfolgt die Abtrennung von 1,1,2-Trichlor-1,2,2-trifluorethan mit dem überwiegenden Anteil an Vinylacetat durch Destillation bei Normaldruck. Die Dünnschicht-Verdampfertemperatur beträgt 130 °C, und bei einer Verdampferfläche von 0,1 $m^2$ läßt sich ein Durchsatz von 9 kg Polymerisationsflotte je Stunde erzielen. Im zweiten Schritt (Vakuumdestillation) beträgt die Verdampfertemperatur 150 °C bei einem Vakuum von 170 mbar. Der Durchsatz beträgt bei einer Verdampferfläche von 0,1 $m^2$ 2,5 kg Produkt je Stunde. Das so gewonnene Polymere ist farblos bis schwach gelblich gefärbt. Es enthält 37 Mol-% an copolymerisierten TFE-Einheiten, 31 Mol-% an copolymerisierten Einheiten des obengenannten stark verzweigten Vinylesters und 32 Mol-%

an copolymerisierten Einheiten von Vinylacetat. Zur Verseifung wird 1 kg des Copolymeren in einem Gemisch aus 1650 ml 1,1,2-Trichlor-1,2,2-trifluorethan und 550 ml Methanol gelöst. Nach Zugabe der jeweiligen Molmenge an NaOH, bezogen auf den Vinylacetatanteil des Copolymeren, wie sie in untenstehender Tabelle 1 wiedergegeben ist, erfolgt die Verseifung bei Raumtemperatur während 5 Stunden unter dauerndem Rühren. Die Kontrolle des Verseifungsgrades (Tabelle 1) erfolgt mittels IR-Spektroskopie durch Messung der OH-Bande bei 3500 $cm^{-1}$. Nach der Umsetzung wird die Reaktionslösung durch Zugabe von Essigsäure auf einen pH-Wert von 6 bis 7 eingestellt. Das zur Verseifung benötigte Lösungsmittelgemisch wird mittels eines Dünnschichtverdampfers abgetrennt und das Produkt in Butylacetat gelöst. Durch eine abschließende Druckfiltration werden als Verunreinigung enthaltende Salze, wie zum Beispiel Natriumacetat, abgetrennt und man erhält ein klares, farblos bis leicht gelb gefärbtes Produkt. Es besitzt eine OH-Zahl von 115. Seine inhärente Viskosität $\eta$, gemessen bei 25 °C in Tetrahydrofuran, beträgt 0,22 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 54 300.

Die Viskositätsbestimmung der 50gew.%igen Lösung erfolgte, wie bei Lacken üblich, mit einem Auslaufbecher 4 mm nach DIN 53 211 und ergab im Butylacetat als Lösungsmittel einen Wert von 53 Sekunden.

Tabelle 1

| NaOH*) (in Form einer 10molaren Lösung) | Verseifungsgrad (bezogen auf Vinylacetat) | OH-Zahl | Verseifungsdauer |
|---|---|---|---|
| 10 Mol-% | 77 % | 127 | 5 Stunden |
| 8 Mol-% | 76 % | 125 | 5 Stunden |
| 6 Mol-% | 72 % | 119 | 5 Stunden |
| 4 Mol-% | 48 % | 79 | 5 Stunden |

*) bezogen auf den Vinylacetatanteil im Polymeren

Beispiel 2

Die Arbeitsweise von Beispiel 1 wird dadurch verändert, daß die Verseifung der gleichen Copolymerlösung mit einer einheitlichen Menge von 4 Mol-% NaOH, bezogen auf Vinylacetat, vorgenommen wird, jedoch über unterschiedliche Zeitdauer. Die erzielten Verseifungsgrade gibt Tabelle 2 wieder.

Tabelle 2

| NaOH*) (in Form einer 10molaren Lösung) | Verseifungsgrad (bezogen auf Vinylacetat) | OH-Zahl | Verseifungsdauer |
|---|---|---|---|
| 4 Mol-% | 48 % | 79 | 5 Stunden |
| 4 Mol-% | 51 % | 84 | 8 Stunden |
| 4 Mol-% | 65 % | 107 | 16 Stunden |
| 4 Mol-% | 70 % | 116 | 22 Stunden |

*) bezogen auf den Vinylacetatanteil im Polymeren

Beispiel 3

Es wird nach der Vorschrift von Beispiel 1 verfahren. Aufgearbeitet wird ein Copolymeres, das 42,6 Mol-% an copolymerisierten TFE-Einheiten, 35,9 Mol-% an copolymerisierten Einheiten des stark verzweigten Vinylesters aus Beispiel 1 und 21,5 Mol-% an copolymerisierten Vinylacetateinheiten enthält.

Für die Verseifung von 1 kg des Copolymeren wird ein Gemisch von 400 ml Methanol und 1900 ml 1,1,2-Trichlor-1,2,2-trifluorethan hinzugefügt. Bei der Verseifung mit 8 Mol-% NaOH, bezogen auf anteiliges Vinylacetat, wird innerhalb von 7 Stunden ein Verseifungsgrad von 61 % erreicht (OH-Zahl 62).

Beispiel 4

Die Aufarbeitung erfolgt wie in Beispiel 1 beschrieben, jedoch erhält man nach der Restmonomerabtrennung ein schwach gelb gefärbtes Produkt mit einem Gehalt an 43 Mol-% copolymerisierten TFE-Einheiten, 36 Mol-% an copolymerisierten Einheiten eines Vinylesters einer stark verzweigten Carbonsäure mit einem Acylrest von 9 C-Atomen (wobei im Acylrest ein Isomerengemisch vorliegt, enthaltend 28 Mol-% C-Ketten mit zwei quartären C-Atomen; 68 Mol-% C-Ketten mit einem quartären und zwei tertiären C-Atomen; 4 Mol-% C-Ketten mit einem quartären und einem tertiären C-Atom) und 21 Mol-% an copolymerisierten Einheiten an Vinylacetat.

Zur Verseifung wird 1 kg des Copolymeren in einem Gemisch aus 1800 ml 1,1,2-Trichlor-1,2,2-trifluorethan und 550 ml Methanol gelöst. Nach Zugabe von 10 Mol-% NaOH, bezogen auf die im Copolymeren enthaltene Menge an Vinylacetat, erfolgt die Verseifung bei Raumtemperatur während 5 Stunden unter dauerndem Rühren. Die Kontrolle des Verseifungsgrades erfolgt mittels IR-Spektroskopie durch Messung der OH-Bande bei 3500 $cm^{-1}$. Nach der Umsetzung wird die Reaktionslösung durch Zugabe von Essigsäure auf einen pH-Wert von 6 bis 7 eingestellt. Das zur Verseifung benötigte Lösungsmittelgemisch wird mittels eines Dünnschichtverdampfers abgetrennt und das Produkt in Xylol gelöst. Durch eine abschließende Druckfiltration werden als Verunreinigung enthaltende Salze, wie zum Beispiel Natriumacetat, abgetrennt und man erhält ein klares, farblos bis leicht gelb gefärbtes Produkt. Es besitzt eine OH-Zahl von 70, entsprechend einem Verseifungsgrad von 61 %. Seine inhärente Viskosität $\eta$, gemessen bei 25 °C in Tetrahydrofuran, beträgt 0,26 dl/g. Die Molekulargewichtsbestimmung durch GPC in Tetrahydrofuran als Relativmessung, bezogen auf Polystyrolstandards, ergab einen Wert von $\overline{M}_{rel}$ = 61 000.

Beispiel 5

Für die Aufarbeitung wird ein fluorhaltiges Copolymeres eingesetzt, das durch Copolymerisation von TFE mit einem stark verzweigten Vinylester [wobei der Acylrest ein Gemisch darstellt aus im wesentlichen einer Acylkomponente mit $R^1 = CH_3$, $R^2 = C_2H_5$, $R^3 = CH_3(CH_2)_4$- und einer weiteren Acylkomponente mit $R^1 = CH_3$, $R^2 = CH_3$, $R^3 = CH_3(CH_2)_5$-] und mit Vinylacetat in einem Gemisch aus 80 Vol-% 1,1,2-Trichlor-1,2,2-trifluorethan und 20 Vol-% Xylol erhalten worden ist. Es liegt als eine klare Copolymerlösung mit einem Feststoffgehalt von 18 % vor. Der Restmonomergehalt beträgt 1,5 % an dem obengenannten stark verzweigten Vinylester und 0,8 % an Vinylacetat. Zur Abtrennung von Polymerisationsflotte und Restmonomeren wird die Produktlösung einer Destillation unterworfen. Im ersten Schritt erfolgt die Abtrennung von 1,1,2-Trichlor-1,2,2-trifluorethan und dem überwiegenden Anteil an Vinylacetat durch Destillation unter Normaldruck. Die Dünnschichtverdampfertemperatur beträgt 130 °C und bei einer Verdampferfläche von 0,1 $m^2$ läßt sich ein Durchsatz von 8 kg Polymerisationsflotte je Stunde erzielen. Im zweiten Schritt (Vakuumdestillation) beträgt die Verdampfertemperatur 150 °C bei einem Vakuum von 125 mbar. Der Durchsatz bei einer Verdampferfläche von 0,1 $m^2$ beträgt 2,4 kg Produkt je Stunde.

Das so gewonnene Polymere ist schwach gelb gefärbt. Es enthält 42 Mol-% an TFE-Einheiten, 33 Mol-% des obengenannten stark verzweigten Vinylesters und 25 Mol-% an Vinylacetat.

Zur Verseifung wird 1 kg des Copolymeren in einem Gemisch aus 1650 ml 1,1,2-Trichlor-1,2,2-trifluorethan und 550 ml Methanol gelöst. Nach Zugabe von 10 Mol-% NaOH, bezogen auf den im Copolymeren vorliegenden Anteil an Vinylacetat, erfolgt die Verseifung bei Raumtemperatur während 5 Stunden unter dauerndem Rühren. Die Kontrolle des Verseifungsgrades erfolgt mittels IR-Spektroskopie durch Messung der OH-Bande bei 3500 $cm^{-1}$. Nach der Umsetzung wird die Reaktionslösung durch Zugabe von Essigsäure auf einen pH-Wert von 6,5 eingestellt. Das zur Verseifung benötigte Lösungsmittelgemisch wird mittels eines Dünnschichtverdampfers abgetrennt und das Produkt in Xylol gelöst. Durch eine abschließende Druckfiltration werden als Verunreinigung enthaltende Salze, wie zum Beispiel Natriumacetat, abgetrennt und man erhält ein klares hellgelbes Produkt. Die Bestimmung der OH-Zahl erfolgt durch Umsetzung des Polymeren mit Essigsäureanhydrid und anschließender Neutralisation der freigesetzten Essigsäure mit Kaliumhydroxid. Das Produkt besitzt eine OH-Zahl von 87, entsprechend einem Verseifungsgrad von 55 %. Seine inhärente Viskosität $\eta$, gemessen bei 25 °C in Tetrahydrofuran, beträgt 0,07 dl/g. Die Molekulargewichtsbestimmung durch GPC in Tetrahydrofuran als Relativmessung, bezogen auf Polystyrolstandards, ergab einen Wert von $\overline{M}_{rel}$ = 20 600.

Die Viskositätsbestimmung der 50gew.%igen Lösung erfolgte, wie bei Lacken üblich, mit einem Auslaufbecher 4 mm nach DIN 53 211 und ergab einen Wert von 47 Sekunden.

## Patentansprüche

1. Verfahren zur Herstellung eines vernetzungsfähigen Lackbindemittels durch Aufarbeitung eines in Lösung befindlichen fluorhaltigen Copolymeren, das aus α) copolymerisierten Einheiten eines Perfluoroolefins, β) eines Vinylesters einer kurzkettigen Carbonsäure, der verseifbar ist, und γ) eines Vinylesters einer stark verzweigten Carbonsäure, der der Verseifung widersteht, besteht, dadurch gekennzeichnet, daß
   a) zunächst der Hauptteil des Lösungsmittels unter Normaldruck destillativ entfernt wird,
   b) sodann die Restmonomeren durch Vakuumdestillation unter Zwangsförderung des hochviskosen Copolymeren entfernt werden,
   c) dieses hochviskose Copolymere gelöst wird in einem Gemisch aus einem Alkanol mit 1 bis 4 C-Atomen und einem Lösungsmittel wobei das Alkanol in einer Menge von 10-60 Vol-% vorhanden ist, und wobei dieses Gemisch imstande sein soll, auch das verseifte Produkt homogen zu lösen, und
   d) die Verseifung unter Zugabe eines alkalischen Agens durchgeführt, gegebenenfalls das Lösungsmittel aus c) destillativ abgetrennt und das verbleibende hochviskose Copolymere in einem Lacklösungsmittel gelöst wird, und
   e) die entstandene Copolymerlösung einer Filtration unterworfen wird.

2. Verfahren zur Herstellung eines vernetzungsfähigen Lackbindemittels durch Aufarbeitung eines in Lösung befindlichen fluorhaltigen Copolymeren gemäß Anspruch 1, dadurch gekennzeichnet, daß bei der destillativen Entfernung des Restmonomeren nach b) ein Fließhilfsmittel zugesetzt wird, das unter den angewandten Bedingungen der Vakuumdestillation zumindest zum Teil im Copolymeren verbleibt.

3. Verfahren zur Herstellung eines vernetzungsfähigen Lackbindemittels durch Aufarbeitung eines in Lösung befindlichen fluorhaltigen Copolymeren gemäß einem oder mehreren der Ansprüche 1 und 2, dadurch gekennzeichnet, daß das Fließhilfsmittel ein alkylsubstituierter aromatischer Kohlenwasserstoff ist.

4. Verfahren zur Herstellung eines vernetzungsfähigen Lackbindemittels durch Aufarbeitung eines in Lösung befindlichen fluorhaltigen Copolymeren gemäß einem oder mehreren der Ansprüche 1 bis 3, dadurch gekennzeichnet, daß die Vakuumdestillation gemäß b) als Extraktivdestillation unter kontinuierlicher Einspeisung eines Extraktionsmittels, das einen Siedepunkt bis 185 °C aufweist, geführt wird.

5. Verfahren zur Herstellung eines vernetzungsfähigen Lackbindemittels durch Aufarbeitung eines in Lösung befindlichen fluorhaltigen Copolymeren gemäß einem oder mehreren der Ansprüche 1 bis 4, dadurch gekennzeichnet, daß in Stufe c) das hochviskose Copolymere gelöst wird in einem Gemisch aus 10 bis 60 Vol-% eines Alkanols mit 1 bis 4 C-Atomen und 40 bis 90 Vol-% eines Lösungsmittels aus der Gruppe der perfluorierten Cycloalkane mit 4 bis 6 C-Atomen; der perfluorierten Alkane mit 2 bis 12 C-Atomen; der mit Fluor und Chlor vollständig oder teilweise substituierten Alkane mit 2 bis 12 C-Atomen; der aliphatischen Ketone mit 3 bis 11 C-Atomen; der mit 1 bis 6 Alkylgruppen von je 1 bis 3 C-Atomen substituierten Benzole; der perfluorierten Ether, die Oligomere des Tetrafluorethylen- oder Hexafluorpropylenoxids oder der Gemische dieser Ether darstellen; oder eines Gemisches von Lösungsmitteln aus diesen Gruppen.

## Claims

1. A process for the preparation of a crosslinkable paint binder by working up a solution of a fluorine-containing copolymer composed of α) copolymerized units of a perfluoroolefin, β) a vinyl ester of a short-chain, saponifiable carboxylic acid, and γ) a vinyl ester of a strongly branched carboxylic acid which resists saponification, wherein
   a) the bulk of the solvent is first removed by distillation under atmospheric pressure,
   b) the residual monomers are then removed by vacuum distillation coupled with a forced transfer of the highly viscous copolymer,
   c) this highly viscous copolymer is dissolved in a mixture of an alkanol having 1 to 4 carbon atoms and a solvent, which mixture contains the alkanol in an amount of 10 to 60% by volume, and this mixture also being capable of dissolving the saponified product to form a homogeneous solution, and

d) the saponification is carried out by the addition of an alkaline agent, the solvent from c) is removed by distillation, if desired, and the remaining highly viscous copolymer is dissolved in a paint solvent, and

e) the resultant solution of the copolymer is filtered.

**2.** The process for the preparation of a crosslinkable paint binder by working up a solution of a fluorine-containing copolymer as claimed in claim 1, wherein in the removal of the residual monomer by distillation according to b) a flow assistant is added which under the conditions used in the vacuum distillation remains, at least in part, in the copolymer.

**3.** The process for the preparation of a crosslinkable paint binder by working up a solution of a fluorine-containing copolymer as claimed in one or more of claims 1 and 2, wherein the flow assistant is an alkyl-substituted aromatic hydrocarbon.

**4.** The process for the preparation of a crosslinkable paint binder by working up a solution of a fluorine-containing copolymer as claimed in one or more of claims 1 to 3, wherein the vacuum distillation according to b) is performed as an extractive distillation with a continuous feed of an extractant which has a boiling point up to 185 °C.

**5.** The process for the preparation of a crosslinkable paint binder by working up a solution of a fluorine-containing copolymer as claimed in one or more of claims 1 to 4, wherein in stage c) the highly viscous copolymer is dissolved in a mixture of 10 to 60% by volume of an alkanol having 1 to 4 carbon atoms and 40 to 90% by volume of a solvent selected from the group of perfluorinated cycloalkanes having 4 to 6 carbon atoms; perfluorinated alkanes having 2 to 12 carbon atoms; alkanes fully or partially substituted with fluorine and chlorine, having 2 to 12 carbon atoms; aliphatic ketones having 3 to 11 carbon atoms; benzenes having 1 to 6 alkyl groups, each substituted by 1 to 3 carbon atoms; perfluorinated ethers which represent oligomers of the tetrafluoroethylene oxide or hexafluoropropylene oxide or mixtures of these ethers; or a mixture of solvents selected from these groups.

## Revendications

**1.** Procédé pour la préparation d'un liant réticulable de vernis par traitement complémentaire d'un copolymère fluoré en solution qui se compose $\alpha$) d'unités copolymérisées d'une perfluoro-oléfine $\beta$) d'un ester vinylique d'un acide carboxylique à chaîne courte qui est saponifiable, et $\gamma$) d'un ester vinylique d'un acide carboxylique très ramifié qui résiste à la saponification, caractérisé en ce que

a) on élimine d'abord une partie essentielle de solvant par distillation à la pression atmosphérique,

b) ensuite, on élimine les monomères résiduaires par distillation sous vide, par entraînement forcé du copolymère très visqueux,

c) on dissout ce copolymère très visqueux dans un mélange composé d'un alcanol avec 1 à 4 atomes de carbone et d'un solvant, l'alcanol étant présent dans une quantité de 10 à 60 % en volume et ce mélange devant être capable de dissoudre de façon homogène aussi le produit saponifié, et

d) on effectue la saponification en ajoutant un agent alcalin, éventuellement on sépare le solvant de c) par distillation et on dissout le copolymère très visqueux restant dans un solvant de vernis, et

e) on filtre la solution de copolymère obtenue.

**2.** Procédé pour la préparation d'un liant de vernis réticulable par traitement complémentaire d'un copolymère fluoré en solution selon la revendication 1, caractérisé en ce qu'au cours de l'élimination par distillation du monomère résiduaire selon b), on ajoute un adjuvant d'écoulement qui, dans les conditions appliquées à la distillation sous vide, reste au moins en partie dans le copolymère.

**3.** Procédé pour la préparation d'un liant de vernis réticulable par traitement complémentaire d'un copolymère fluoré en solution selon une ou plusieurs des revendications 1 et 2, caractérisé en ce que l'adjuvant d'écoulement est un hydrocarbone aromatique substitué par des alkyles.

**4.** Procédé pour la préparation d'un liant de vernis réticulable par traitement complémentaire d'un copolymère fluoré en solution selon une ou plusieurs des revendications 1 à 3, caractérisé en ce qu'on met en oeuvre la distillation sous vide selon b) en tant que distillation extractive, en alimentant en

continu par un agent d'extraction, qui présente un point d'ébullition jusqu'à 185 °C.

5. Procédé pour la préparation d'un liant de vernis réticulable par traitement complémentaire d'un copolymère fluoré en solution selon une ou plusieurs des revendications 1 à 4, caractérisé en qu'on dissout dans l'étape c) le copolymère très visqueux dans un mélange de 10 à 60 % en volume d'un alcanol avec 1 à 4 atomes de carbone et de 40 à 90 % en volume d'un solvant pris dans le groupe comportant des cycloalcanes perfluorés avec 4 à 6 atomes de carbone; des alcanes perfluorés avec 2 à 12 atomes de carbone ; des alcanes avec 2 à 12 atomes de carbone substitués entièrement ou partiellement par le fluor et le chlore ; des cétones aliphatiques avec 3 à 11 atomes de carbone ; des benzènes substitués par 1 à 6 groupes alkyle pour chaque fois 1 à 3 atomes de carbone ; des éthers perfluorés, qui présentent des oligomères de l'oxyde de tétrafluoroéthylène ou de l'oxyde de hexafluoropropylène ou des mélanges de ces éthers ; ou d'un mélange de solvants de ces groupes.